# EUROPÄISCHE PATENTSCHRIFT

(11) **EP 0 455 847 B1**
(45) Veröffentlichungstag und Bekanntmachung des Hinweises auf die Patenterteilung: **27.07.1994**
(21) Anmeldenummer: 90108597.7
(22) Anmeldetag: 07.05.1990
(51) Int. Cl.: G21C 3/322

(54) **Brennelement für wassergekühlte Kernreaktoren**
Fuel assembly for water-cooled nuclear reactors
Assemblage de combustible pour réacteurs nucléaires refroidis par l'eau

(43) Veröffentlichungstag der Anmeldung: 13.11.1991
(73) Patentinhaber: SIEMENS AKTIENGESELLSCHAFT, 80333 München (DE)
(72) Erfinder: Bezold, Helmut, D-8551 Egolffstein (DE)

(56) Entgegenhaltungen:
- EP-A- 0 026 029
- EP-A- 0 237 064
- DE-A- 1 764 030
- GB-A- 1 088 022

## Beschreibung

Die vorliegende Erfindung betrifft ein Brennelement nach dem Gattungsbegriff des Patentanspruches 1.

Spezielle Ausführungsformen von Abstandhaltergittern solcher Brennelemente zeigen beispielsweise die US-PS 3 395 077 und 3 379 619. Die dort beschriebenen Beispiele von Abstandhaltergittern zeigen Strömungsleiteinrichtungen, die außerhalb der Maschen der Abstandhaltergitter angeordnet sind und aus Vorsprüngen der Blechstege bestehen, die in die Zwischenräume zu benachbarten Brennstäben hineinragen. Aufgabe derartiger Strömungsleiteinrichtungen ist es, die Kühlmittelströmung um die Brennstäbe herum zu verwirbeln, also turbulent zu gestalten und damit die Kühlung der Brennstäbe zu vergleichmäßigen und zu verbessern. Dieser Effekt wird bei den erwähnten bekannten Ausführungsbeispielen aber nur unvollkommen erreicht, da die Kühlmittelströmung durch die Maschen der Abstandhaltergitter gleichgerichtet wird, so daß die Ablenkung an den Strömungsleiteinrichtungen wegen deren begrenzter Längsausdehnung außerhalb dieser Maschen wenig wirksam und mit hohem Druckverlust verbunden ist. Da die aus Fortsätzen der Blechstege gebildeten Strömungsleiteinrichtungen auf die Brennstäbe zu gerichtet sind, besteht außerdem beim Einschieben derselben im Reparaturfall die Gefahr des Versperrens wegen der biegeweichen Ausführung der Strömungsleiteinrichtungen.

Es besteht daher die Aufgabe, eine Abstandhalterkonstruktion zu finden, die bei wesentlich verbesserter Strömungsführung einen geringen Druckabfall des Kühlmittels beim Durchgang durch das Brennelement ergibt und außerdem das Einführen der Brennstäbe in die Abstandhaltergitter beim Aufbau der Brennelemente sowie im Reparaturfall nicht behindert. Dabei sollte auch eine mechanische Verstärkung der Abstandhaltergitter erreicht werden, so daß die in einem Störfall möglicherweise auftretende Querbelastung nicht zu Deformationserscheinungen führen kann.

Zur Lösung dieser Aufgabe hat ein Brennelement der eingangs erwähnten Art erfindungsgemäß die Merkmale des kennzeichnenden Teiles des Patentanspruches 1.

Besonders vorteilhaft ist eine Ausführungsform entsprechend Patentanspruch 2.

Die Erfindung und ihre Vorteile sind anhand der Zeichnung an Ausführungsbeispielen näher erläutert:
FIG 1 zeigt in Draufsicht und schematisch den prinzipiellen Aufbau eines Abstandhaltergitters.
FIG 2a bis 2g zeigen im Längsschnitt Abstandhaltermaschen von Abstandhaltergittern erfindungsgemäßer Brennelemente.
FIG 3 zeigt im Längsschnitt und
FIG 4 in Draufsicht eine Abstandhaltermasche einer weiteren Ausführungsform für ein Abstandhaltergitter eines erfindungsgemäßen Brennelementes.
FIG 5 zeigt in Draufsicht das Abstandhaltergitter mit Abstandhaltermaschen entsprechend Figuren 3 und 4.
FIG 6 zeigt eine perspektivische Ansicht des Abstandhaltergitters nach FIG 5.
FIG 7 zeigt im Längsschnitt und
FIG 8 in Draufsicht eine Masche nach Figuren 3 und 4 mit vorteilhaften Weiterbildungen.
FIG 9 zeigt in perspektivischer Ansicht einen Blechsteg für ein Abstandhaltergitter eines erfindungsgemäßen Brennelementes.
FIG 10 zeigt in Seitenansicht einen Gittersteg für ein Abstandhaltergitter eines erfindungsgemäßen Brennelementes.
FIG 11 zeigt einen Schnitt entlang der strichpunktierten Linie XI-XI in FIG 10.

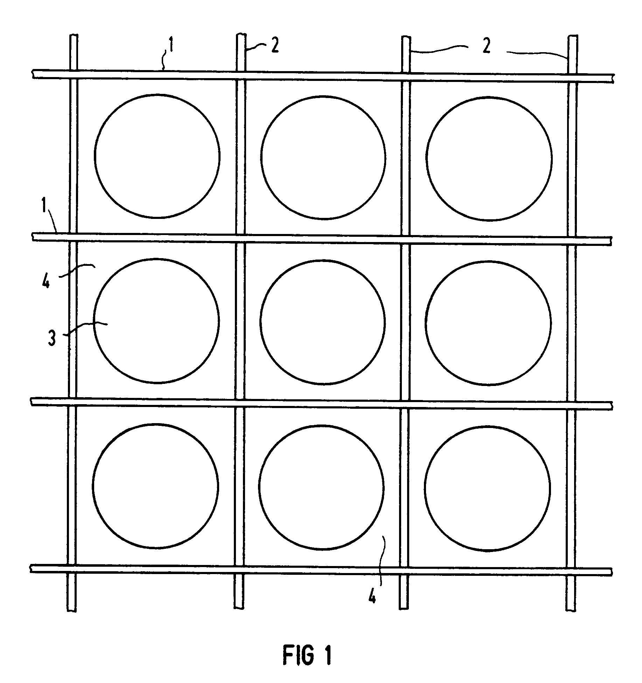

Beim Abstandhaltergitter nach FIG 1 bilden hochkant angeordnete und senkrecht zueinander verlaufende Blechstege 1 und 2 Abstandhaltermaschen 4, die jeweils einen Brennstab 3 umfassen.

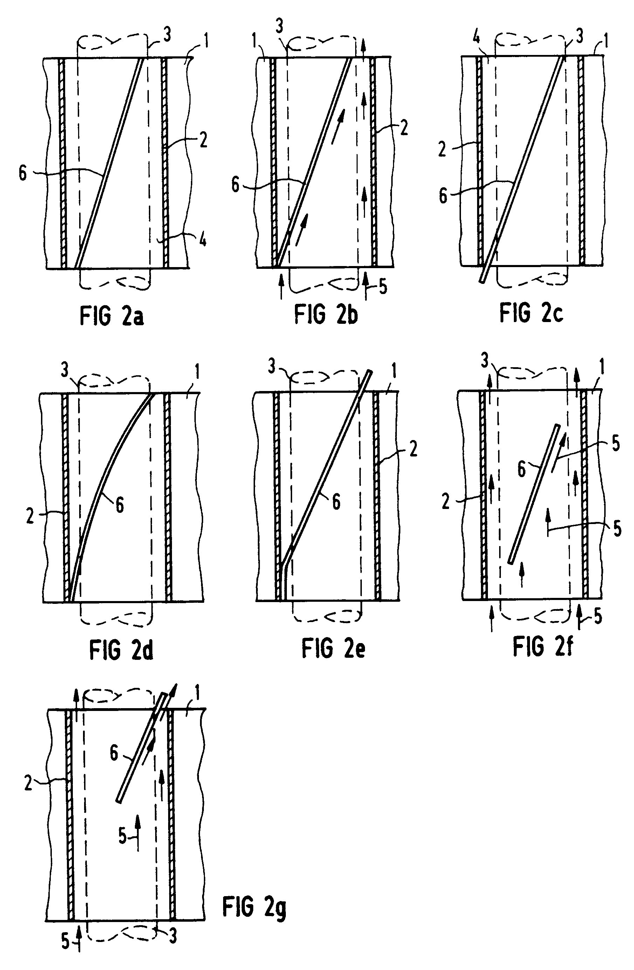

Die Figuren 2a bis 2g veranschaulichen schematisch verschiedene Möglichkeiten der Anordnung von Strömungsleitblechen 6 innerhalb eine Abstandhaltermasche 4. Der umfaßte Brennstab 3 ist nur schematisch strichliert dargestellt. Die senkrecht auf den Maschenwänden 1 und 2 angebrachten Strömungsleitbleche 6 sind gerade bzw. leicht gewölbt, haben einen diagonalen Verlauf und leiten die Kühlmittelströmung 5 schräg nach oben. Somit können je nach Länge der Strömungsleitbleche 6 auch bestimmte Teilströme des Kühlmittels zur Erzielung der gewünschten Durchmischung und Turbulenz umgelenkt werden. Die Strömungsleitbleche 6 sind an den Wänden der Abstandhaltermaschen 4 angeschweißt.

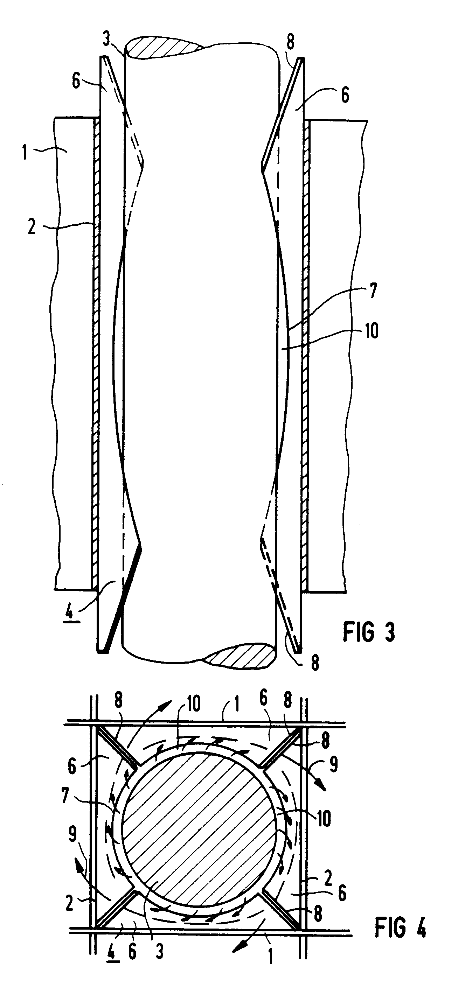

Die Figuren 3 und 4 zeigen in Seitenansicht und in Draufsicht die Umschließung eines Brennstabes 3 durch die Strömungsleitbleche 6. Diese sind an einer Längskante 7 zwischen ihren Enden mit einem elliptischen Ausschnitt versehen und umfassen auf diese Weise unter Ausbildung eines Spaltes 10 zwischen der Längskante 7 und dem Brennstab 3 den Brennstab 3. An den Enden der Strömungsleitbleche 6 sind die Längskanten 7 nach außen in Richtung auf die zugehörigen Wände der Abstandhaltermaschen 4 hin abgeschrägt und ermöglichen mit den so gebildeten Schrägen 8 ein leichtes Einschieben des Brennstabes 3 in die Abstandhaltermaschen 4. Mit ihren Enden ragen die Strömungsleitbleche 6 über diese Abstandhaltermaschen 4 hinaus.

FIG 4 zeigt in Draufsicht die infolge der Umschließung des Brennstabes 3 durch die Strömungsleitbleche 6 und durch die Wände der Abstandhaltermasche 4 erreichte drallförmige Strömung 9. Die der Außenfläche eines einzelnen Brennstabes 3 nahe axiale Strömung wird von der drallförmigen Strömung 9 erfaßt und mit ihr vermischt, siehe kleine Pfeile.

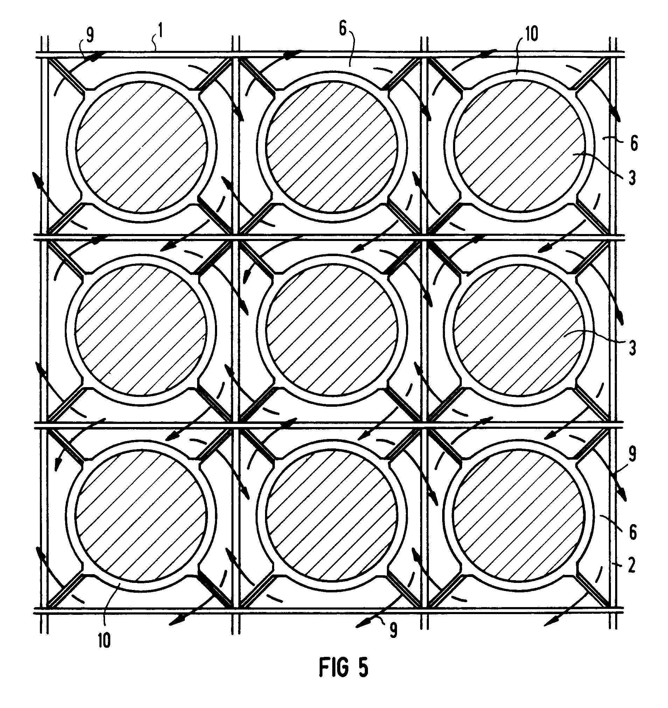

Aus FIG 5 ist an einem Ausschnitt an einem Abstandhaltergitter die drallförmige Strömung 9 des Kühlmittels auf der Abströmseite des Abstandhaltergitters erkennbar. Wie dargestellt, ergibt sich im Bereich der Kreuzungsstellen der Blechstege 1 und 2 die gewünschte Verwirbelung der Kühlmittelströmung an benachbarten Brennstäben 3 und damit eine Verbesserung der Kühlwirkung.

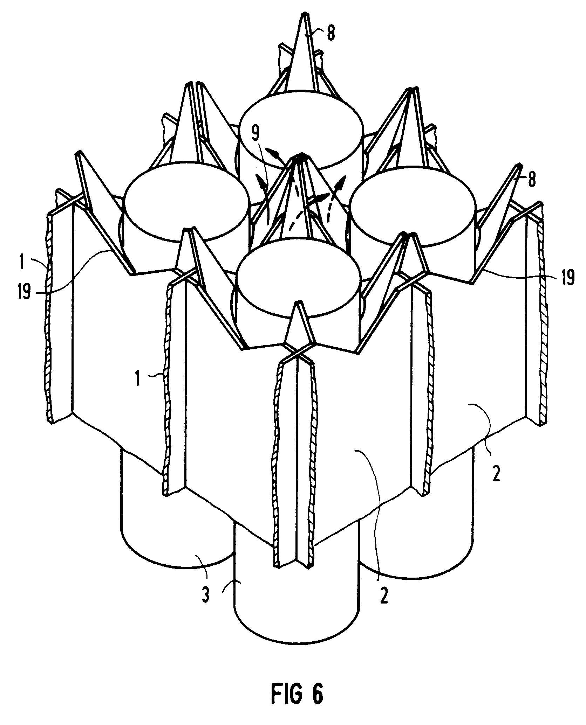

In FIG 6, die zur besseren Erläuterung der räumlichen Verhältnisse eine perspektivische Ansicht der Anordnung nach FIG 5 zeigt, sind ferner Materialausschnitte 19 in den Kanten der Blechstege 1 und 2 an der Abströmseite des Abstandhaltergitters zu sehen, die neben einer Materialersparnis der Verbesserung des Strömungsaustrittes aus den Abstandhaltermaschen 4 dienen. Die Funktion eines Abstandhaltergitters erfordert Elemente, die die Brennstäbe in der vorgegebenen Position genau und betriebssicher haltern. Dies wird in bekannter Weise mit federnden Gliedern alleine oder in Kombination mit festen Anlagepunkten für die Brennstäbe bewerkstelligt, siehe die eingangs erwähnte US-Patentschrift 3 379 619.

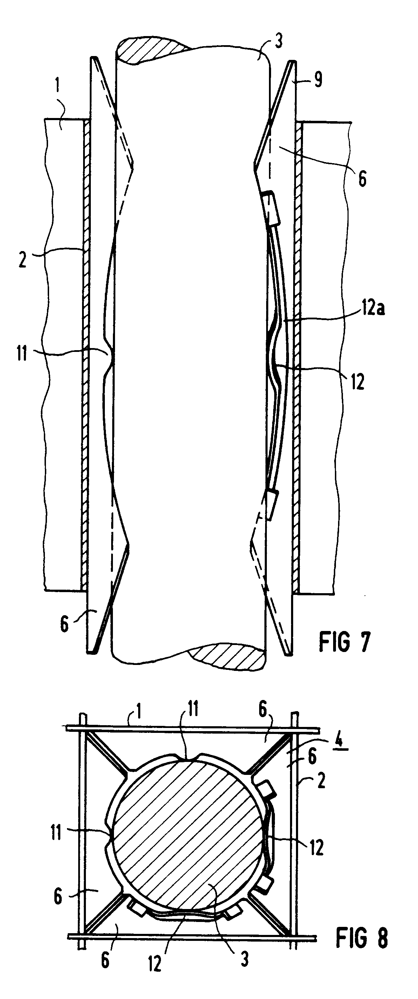

In Weiterbildung der Erfindung können derartige feste und federnde Anlagepunkte in Verbindung mit den Strömungsleitblechen angebracht werden. Dies ist in den Figuren 7 bis 9 dargestellt. Nach FIG 7 befindet sich ein starrer Anlagepunkt 11 z.B. als verdickter Vorsprung auf dem Strömungsleitblech 6. Diese Verdickung kann mit Hilfe eines Schweißpunktes oder mit einer Umlappung (umgebogene Lasche) des Strömungsleitbleches 6 hergestellt werden. Auf dem gegenüberliegenden Strömungsleitblech 6 ist ein federnder Anlagepunkt 12 in Gestalt einer Blattfeder 12a angebracht. Unterhalb dieser Blattfeder 12a kann das Strömungsleitblech 6 leicht ausgeschnitten sein.

Aus FIG 8 ist in Draufsicht die Abstandhaltermasche 4 zu ersehen mit starren und federnden Anlagepunkten 11 und 12 in gegenüberliegender Anordnung. Damit ist eine schwingungsfreie Halterung des jeweiligen Brennstabes 3 sichergestellt.

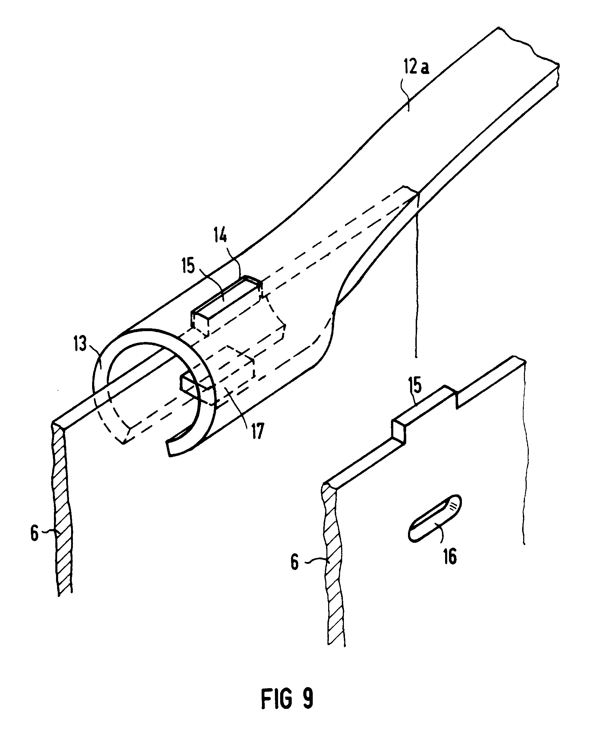

Die FIG 9 zeigt in sehr starker Vergrößerung die Befestigung der Blattfeder 12a auf dem Strömungsleitblech 6. Dies wird ohne metallurgische Verfahren durch eine gegenseitige unverlierbare Verklinkung dieser Bauelemente erreicht. Zu diesem Zweck ist die Blattfeder 12a an beiden Enden zu einem offenen Federring 13 ausgeformt. Auf der Stirnseite dieses Federringes 13 ist ein Schlitz 14 angebracht, am offenen Teil des Federringes 13 befindet sich ein Vorsprung 17. Das Strömungsleitblech 6 ist zur Befestigung der Blattfeder 12a mit einem Vorsprung 15 sowie mit einem seitlichen Schlitz 16 versehen. Zur Verbindung zwischen Blattfeder 12a und Strömungsleitblech 6 wird die Blattfeder 12a mit dem offenen Federring 13 auf das Strömungsleitblech aufgeschoben, bis der Vorsprung 15 am Strömungsleitblech 6 in den Schlitz 14 der Blattfeder 12a einrastet. Zugleich rastet damit auch der Vorsprung 17 am Federring 13 in den Schlitz 16 am Strömungsleitblech 6 ein, so daß damit eine unverlierbare Lage der Blattfeder 12a auf dem Strömungsleitblech gesichert ist.

Infolge einer Federbelastung auftretende Längs- und Querkräfte werden durch den am Strömungsleitblech 6 befindlichen Vorsprung aufgenommen. Die so ausgebildete Blattfeder 12a als federnder Anlagepunkt 12 setzt dem am Strömungsleitblech 6 entlang strömenden Kühlmittel nur wenig Querschnitt entgegen. Im Bereich der Anlegestelle des Brennstabes kann durch eine entsprechende Aussparung im Strömungsleitblech 6 für eine zusätzliche Kühlung durch in Axialrichtung strömendes Kühlmittel gesorgt werden. Mit einer solchen Aussparung kann zugleich ein Anschlag für die Blattfeder 12a geschaffen werden, der diese bei einer unvorhergesehenen Überlastung verbleibender Deformation schützt.

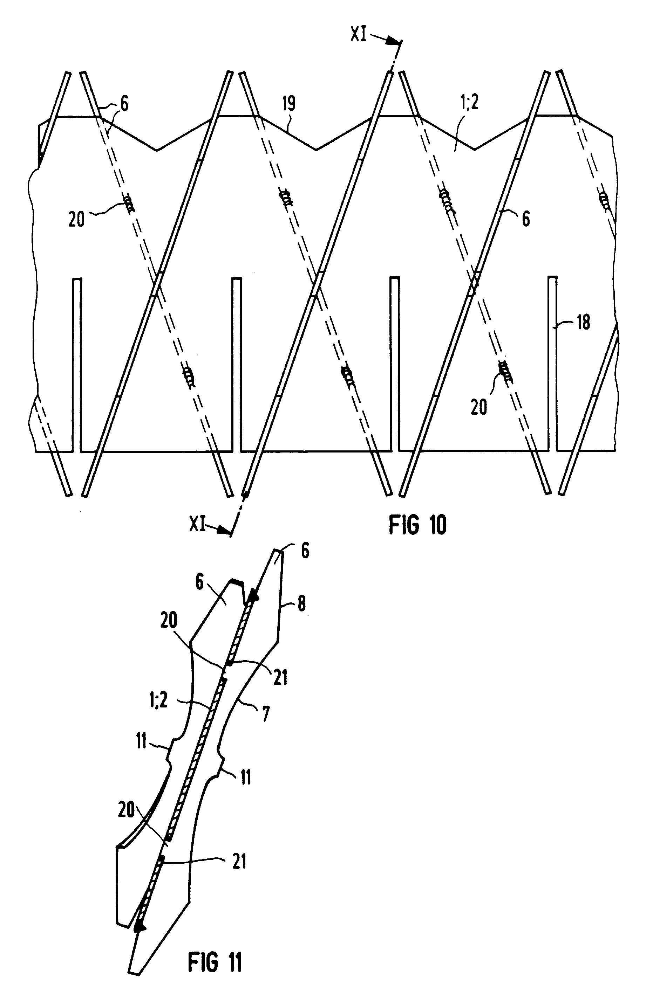

Da die Anbringung der Strömungsleitbleche 6 in einem verdeckt zusammengesetzten Abstandhaltergitter mit technischen Schwierigkeiten verbunden sein kann, ist es günstig, wenn diese Strömungsleitbleche 6 auf den Blechstegen 1 und 2 vor dem Zusammenfügen derselben zum Abstandhaltergitter befestigt werden. Ein Blechsteg 1 bzw. 2 ist in FIG 10 dargestellt. Die Strömungsleitbleche 6 werden zunächst mit Vorsprüngen 20 in Schlitze 21 des Blechsteges 1; 2 eingesetzt und dort verschweißt. Diese Lage ist in FIG 11 dargestellt. Die mit 18 bezeichneten Schlitze dienen zum Zusammenstecken der Blechstege 1 und 2, so daß dadurch das Abstandhaltergitter entsteht und durch Verschweißen an den Kreuzungsstellen die benötigte Festigkeit erhält. Durch die beidseitige Verschweißung der Strömungsleitbleche 6 entstehen infolge der auf beiden Seiten der Blechstege 1 und 2 gegebenen Diagonalverrippungen erhebliche Versteifungen dieser Blechstege, die zu einer hohen Querbelastbarkeit des Abstandhaltergitters führen. Dies erlaubt auch, die Höhe des Abstandhaltergitters so zu reduzieren, daß der Materialaufwand gegenüber bekannten Konstruktionen nicht größer wird. Zudem können auch Materialausschnitte 19 an den Blechstegen 1 und 2 vorgesehen sein, vorzugsweise an den an der Abströmseite des Abstandhaltergitters für das strömende Kühlmittel liegenden Kanten der Maschenwände.

Die in den Ausführungsbeispielen dargestellten konstruktiven Elemente dienen lediglich der Veranschaulichung des Grundgedankens der vorliegenden Erfindung. Je nach speziellen Anwendungszwecken sind verschiedene Arten von Strömungsleitblechen 6 (vgl. Figuren 2a bis 2g) möglich. Das gleiche gilt auch für die Blattfedern 12a, die in an sich bekannter Weise durch entsprechende Wellung in ihrer Federkraft eingestellt und anstelle einer mechanischen Verklinkung mit den Strömungsleitblechen 6 an ihren Enden durch Punktschweißung mit diesen Strömungsleitblechen 6 verbunden sein können.

## Patentansprüche

1. Brennelement für wassergekühlte Kernreaktoren, in dem parallel angeordnete, mit Kernbrennstoff gefüllte Brennstäbe durch die Maschen aus hochkant angeordneten Blechstegen gebildeter Abstandhaltergitter in ihrer gegenseitigen Lage fixiert sind und in dem diese Abstandhaltergitter in mehreren Ebenen über die Höhe des Brennelementes verteilt angeordnet sind, wobei wenigstens eine durch einen Blechsteg (1 bzw. 2) gebildete Wand einiger Abstandhaltermaschen (4) der Abstandhaltergitter mit einem senkrecht auf dieser Wand befestigten Strömungsleitblech (6) versehen ist,
**dadurch gekennzeichnet,**
daß das Strömungsleitblech (6) auf der Diagonalen dieser Wand angeordnet und an seiner Längskante (7) elliptisch so ausgeschnitten ist, daß gegenüber dem die Abstandhaltermasche (4) jeweils durchsetzenden Brennstab (3) Abstand verbleibt.

2. Brennelement nach Anspruch 1,
**dadurch gekennzeichnet,**
daß jede der vier durch Blechstege (1 und 2) gebildeten Wände jeder Abstandhaltermasche (4) mit dem diagonal verlaufenden Strömungsleitblech (6) versehen ist.

3. Brennelement nach den Ansprüchen 1 oder 2,
**dadurch gekennzeichnet,**
daß die diagonal angeordneten Strömungsleitbleche (6) in sich gerade oder leicht gewölbt sind und mit den Wänden der Abstandhaltermasche (4) verschweißt sind.

4. Brennelement nach einem der Ansprüche 1 bis 3,
**dadurch gekennzeichnet,**
daß die Strömungsleitbleche (6) über die Abstandhaltermaschen (4) der Abstandhaltergitter hinausragen und in Richtung auf die zugehörigen Wände der Abstandhaltermaschen (4) abgeschrägt sind.

5. Brennelement nach einem der Ansprüche 1 bis 4,
**dadurch gekennzeichnet,** daß ein Strömungsleitblech (6) mit einem starren Anlagepunkt (11) und ein jeweils gegenüber angeordnetes Strömungsleitblech (6) mit einem federnden Anlagepunkt (12) für die exakte Halterung des durch diese Strömungsleitbleche umfaßten Brennstabes (3) versehen ist.

6. Brennstab nach Anspruch 5,
**dadurch gekennzeichnet,**
daß der starre Anlagepunkt (11) durch eine umgebogene Lasche des Strömungsleitbleches (6) gebildet ist.

7. Brennelement nach Anspruch 5,
**dadurch gekennzeichnet,**
daß der starre Anlagepunkt (11) aus einer mittels eines Schweißpunktes gebildeten Verdickung des Strömungsleitbleches (6) besteht.

8. Brennelement nach Anspruch 5,
**dadurch gekennzeichnet,**
daß der federnde Anlagepunkt (12) durch eine mit dem Strömungsleitblech (6) verbundene Blattfeder (12a) gebildet ist.

9. Brennelement nach Anspruch 8,
**dadurch gekennzeichnet,**
daß das Strömungsleitblech (6) unterhalb der Blattfeder (12a) leicht ausgeschnitten ist.

10. Brennelement nach Anspruch 8,
**dadurch gekennzeichnet,**
daß die an ihren beiden Enden ringförmig ausgebildet Blattfeder (12a) auf das Strömungsleitblech (6) aufgesteckt und über Schlitze und entsprechende Vorsprünge (14 bis 16) unverlierbar mit diesen verklinkt ist.

11. Brennelement nach einem der Ansprüche 1 bis 10,
**dadurch gekennzeichnet,**
daß die diagonalen Strömungsleitbleche (6) an den Blechstegen (1 und 2) über einander entsprechende Schlitze (21) und Vorsprünge (20) in ihrer Sollage fixiert und durch Punktschweißung befestigt sind.

12. Brennelement nach Anspruch 10,
**dadurch gekennzeichnet,**
daß die durch die Strömungsleitbleche (6) versteiften Blechstege Materialausschnitte (19) aufweisen.

13. Brennelement nach Anspruch 12,
**dadurch gekennzeichnet,**
daß Materialausschnitte (19) der Blechstege (1 und 2) an den an der Abströmseite für das Kühlmittel liegenden Kanten der Blechstege (1 und 2) vorgesehen sind.

## Claims

1. Fuel element for water-cooled nuclear reactors, in which fuel element fuel rods filled with nuclear fuel and arranged in parallel are fixed in their mutual position by the meshes (of) spacer grids formed from sheet metal bars arranged on edge and in which fuel element these spacer grids are arranged in several planes distributed over the extent of the fuel element, wherein at least one wall, formed by a sheet metal bar (1 or 2), of some spacer meshes (4) of the spacer grids is provided with a flow baffle plate (6) secured to this wall in a perpendicular manner, characterised in that the flow baffle plate (6) is arranged on the diagonal of this wall and cut out on its longitudinal edge (7) in an elliptic manner so that there remains clearance vis-a-vis the fuel rod (3) penetrating in each case the spacer mesh (4).

2. Fuel element according to claim 1, characterised in that each of the four walls, formed by metal sheet bars (1 and 2), of each spacer mesh (4) is provided with the flow baffle plate (6) extending diagonally.

3. Fuel element according to claims 1 or 2, characterised in that the flow baffle plates (6) arranged diagonally are in themselves straight or slightly curved and are welded with the walls of the spacer mesh (4).

4. Fuel element according to one of claims 1 to 3, characterised in that the flow baffle plates (6) project beyond the spacer meshes (4) of the spacer grids and are bevelled in the direction of the appertaining walls of the spacer meshes (4).

5. Fuel element according to one of claims 1 to 4, characterised in that a flow baffle plate (6) is provided with a rigid bearing point (11) and a flow baffle plate (6) arranged in each case opposite is provided with an elastic bearing point (12) for the accurate mounting of the fuel rod (3) surrounded by these flow baffle plates.

6. Fuel rod according to claim 5, characterised in that the rigid bearing point (11) is formed by a bent lug of the flow baffle plate (6).

7. Fuel element according to claim 5, characterised in that the rigid bearing point (11) consists of a thickening of the flow baffle plate (6) formed by means of a welding spot.

8. Fuel element according to claim 5, characterised in that the elastic bearing point (12) is formed by a plate spring (12a) connected to the flow baffle plate (6).

9. Fuel element according to claim 8, characterised in that the flow baffle plate (6) is cut out slightly below the plate spring (12a).

10. Fuel element according to claim 8, characterised in that the plate spring (12a) formed in a ring shape at its two ends is mounted on the flow baffle plate (6) and is interlocked with this in an undetachable manner by way of slits and corresponding projections (14 to 16).

11. Fuel element according to one of claims 1 to 10, characterised in that the diagonal flow baffle plates (6) are fixed in their ideal position on the sheet metal bars (1 and 2), by way of slits (21) and projections (20) corresponding to one another, and secured by spot welding.

12. Fuel element according to claim 10, characterised in that the sheet metal bars stiffened by the flow baffle plates (6) have material cutaway portions (19).

13. Fuel element according to claim 12, characterised in that the material cutaway portions (19) of the sheet metal bars (1 and 2) are provided on the edges of the sheet metal bars (1 and 2) lying on the flow-off side for the cooling agent.

## Revendications

1. Assemblage combustible de réacteur nucléaire à refroidissement par de l'eau, dans lequel des crayons combustibles parallèles et emplis de combustible nucléaire sont immobilisés en leur position mutuelle dans les mailles de grilles d'entretoise formées de réglettes de tôle sur champ, et dans lequel ces grilles d'entretoise sont réparties en plusieurs plans sur la hauteur de l'assemblage combustible, au moins une paroi formée d'une bande de tôle (1 et 2) de quelques mailles (4) des grilles d'entretoise étant munie d'une tôle (6) de déviation du courant fixée perpendiculairement à cette paroi,
caractérisé
en ce que la tôle (6) de déviation du courant est disposée sur la diagonale de cette paroi et est découpée sur son bord (7) longitudinal elliptiquement de manière à rester à distance du crayon combustible (5) passant dans la maille (4) de l'entretoise.

2. Assemblage combustible suivant la revendication 1,
caractérisé
en ce que chacune des quatre parois formées par des réglettes de tôle (1 et 2) de chaque maille (4) d'entretoise, est munie de la tôle (6) de déviation du courant s'étendant en diagonale.

3. Assemblage combustible suivant la revendication 1 ou 2,
caractérisé
en ce que les tôles (6) de déviation du courant disposées en diagonale sont rectilignes ou légèrement incurvées et sont soudées aux parois de la maille (4) d'entretoise.

4. Assemblage combustible suivant l'une des revendications 1 à 3,
caractérisé
en ce que les tôles (6) de déviation du courant font saillie au-delà des mailles (4) des grilles d'entretoise et sont biseautées en direction des parois correspondantes des mailles (4) d'entretoise.

5. Assemblage combustible suivant l'une des revendications 1 à 4,
caractérisé
en ce qu'une tôle (6) de déviation du courant est munie d'un point de contact (11) rigide et qu'une tôle (6) de déviation du courant opposé est munie d'un point (12) de contact élastique pour maintenir exactement le crayon combustible (3) entouré de ces tôles de déviation du courant.

6. Assemblage combustible suivant la revendication 5,
caractérisé
en ce que le point (11) de contact est formé par une patte coudée de la tôle (6) de déviation du courant.

7. Assemblage combustible suivant la revendication 5,
caractérisé
en ce que le point (11) de contact rigide est constitué d'un épaississement de la tôle de déviation du courant formé au moyen d'un point de soudure.

8. Assemblage combustible suivant la revendication 5,
caractérisé
en ce que le point (12) de contact élastique est formé par un ressort (12a) à lame relié à la tôle (6) de déviation du courant.

9. Assemblage combustible suivant la revendication 8,
caractérisé
en ce que la tôle (6) de déviation du courant est légèrement découpée en-dessous du ressort (12a) à lame.

10. Assemblage combustible suivant la revendication 8,
caractérisé
en ce que le ressort (12a) à lame annulaire à ses deux extrémités est enfilé sur la tôle (6) de déviation du courant et est encliqueté à celle-ci de manière à ne pas pouvoir se perdre par des mortaises et des tenons (14 à 16) correspondants.

11. Assemblage combustible suivant l'une des revendications 1 à 10,
caractérisé
en ce que les tôles (6) de déviation du courant en diagonale sont immobilisées en la position qu'elles doivent avoir sur les réglettes (1 et 2) de tôles par des mortaises (21) et tenons (20) se correspondant et sont fixées par des points de soudure.

12. Assemblage combustible suivant la revendication 10,
caractérisé
en ce que les réglettes de tôles rigidifiées par les tôles (6) de déviation du courant comportent des découpes (19) d'enlèvement de matière.

13. Assemblage combustible suivant la revendication 12,
caractérisé
en ce que les découpes (19) d'enlèvement de matière des réglettes (1 et 2) de tôle sont prévues sur les bords des réglettes (1 et 2) de tôle se trouvant du côté en aval pour le fluide de refroidissement.
